# EUROPEAN PATENT SPECIFICATION

(11) **EP 2 025 461 B1**
(45) Date of publication and mention of the grant of the patent: **15.12.2021**
(21) Application number: 07742905.8
(22) Date of filing: 07.05.2007
(51) Int. Cl.: C09J 7/29, C09J 7/38, B32B 27/06, B32B 27/32, B24B 9/14

(54) **PRESSURE SENSITIVE ADHESIVE SHEET AND METHOD OF EDGING OPERATION**
HAFTKLEBEFOLIE UND SÄUMVERFAHREN
FEUILLE ADHESIVE SENSIBLE A LA PRESSION ET PROCEDE DE BORDAGE

(30) Priority: 12.05.2006 JP 2006133626; 23.08.2006 JP 2006226223
(43) Date of publication of application: 18.02.2009
(73) Proprietor: EHS Lens Philippines, Inc., Cavite (PH)
(72) Inventor: SUZUKI, Keiichi, Suwa-shi Nagano 3928502 (JP); KOIKE, Toshihiro, Tokyo 1030023 (JP)
(74) Representative: Hoffmann Eitle
(86) International application number: PCT/JP2007/059470
(87) International publication number: WO 2007/132694

(56) References cited:
- EP-A1- 0 745 653
- JP-A- 10 001 645
- JP-A- 2001 354 926
- JP-A- 2002 265 890
- JP-A- 2003 311 595
- JP-A- 2004 122 302
- JP-A- 2004 244 585
- JP-A- 2006 299 115
- JP-A- 2006 299 115
- Astm: "Standard Test Method for Haze and Luminous Transmittance of Transparent Plastics", ASTM D-1003-2000, 1 January 2000 (2000-01-01), pages 1-6, XP055297207, Retrieved from the Internet: URL:www.astm.org [retrieved on 2016-08-24]

## Description

### Technical Field

The present invention relates to an adhesive sheet provided between at least one of a pair of chucks and a lens in an edging machine, and an edging method using the same.

### Background Art

In many spectacle lenses, an antireflective layer is provided on a surface of the spectacle lens in order to suppress light reflections and increase light transmittance. However, e.g. a grime of hands, a fingerprint, perspiration or cosmetics is often adhered to the antireflective layer when the spectacle lens is used. Such stains are conspicuous and not easily removed. Therefore, an antifouling layer is often provided on a surface of the antireflective layer in order to prevent the spectacle lens from being easily stained or in order to easily remove the stains even when the spectacle lens is stained. Further, the spectacle lens can be protected from a scratch when the stains can be easily removed due to the antifouling layer (for example, see JP-A-09-258003). A spectacle lens having an antifouling layer formed of such a fluorine-containing silane compound as disclosed in JP-A-09-258003exhibits favorable antifouling property and abrasion-resistance, effects of which are long lasting.

At a retail shop of spectacles, so-called an edging process (lens-shaping process) has been performed for grinding a round spectacle lens in order to fit the lens into a spectacle frame.

In such an edging process, a processing center of the spectacle lens is sucked and held by chucks of an edging machine, or the processing center of the spectacle lens is clamped while being applied with pressure from both sides of the lens. Subsequently, an edge of the spectacle lens is ground with a grinding stone while the spectacle lens is held by a frictional force. Since a surface of the lens held by the chucks is too slippery, the lens slips from the chucks due to a grinding pressure of the grinding stone and may not be suitably positioned (a so-called axial misalignment is occurred) when the lens is ground by the grinding stone. Thus, a precise edging process cannot be performed at this time.

In view of the above, an adhesive tape having an excellent adhesive strength to be tightly adhered to an antifouling layer is attached to a surface of a spectacle lens with which chucks of an edging machine are in contact according to a known method (see JP-A-2004-249454). According to such a method, the adhesive tape for edging is attached to a convex surface of the spectacle lens to cover a processing center thereof. Then, a lens lock tape is attached on the adhesive tape for edging.

JP-A-2003-311595 discloses an adhesive sheet comprising an acrylic adhesive placed between at least one of a pair of chucks of a global processor and a lens, wherein the adhesive sheet comprises a base material layer made of an elastic foam urethane sheet and an adhesive layer coated on the surface of the base material layer, and the adhesive layer formed on an areas facing the lens surface comprises a polymer having an acrylate as a main ingredient and a composition containing a crosslinking agent.

JP-A-2004-122302 relates to a method of processing a lens which can securely fix a holding jig even if the lens has a water-repellent coating and can grind the lens into an accurate shape, wherein an adhesive sheet is placed between at least one pair of chucks of a global processor and a lens, the adhesive sheet having a through-hole so that the central point and the stamp point can be visually observed.

EP-A-0 745 653 describes an adhesive sheet comprising a surface stock and an adhesive layer, the adhesive layer being formed by coating the surface stock with an adhesive having redispersibility in water and drying the adhesive, the adhesive containing a copolymer, the copolymer comprising, based on the copolymer, (a) 5-40 wt.% of at least one of a carboxylic acid-modified rosin ester monomer and a rosin ester monomer, (b) 5-40 wt.% of a (poly)ethylene glycol (meth)acrylate monomer, and (c) 30-60 wt.% of a (meth)acrylic acid C₄₋₁₈-alkyl ester monomer.

### Disclosure of the Invention

### Problems to Be Solved by the Invention

However, additional working process may be required for preparing two tapes, namely, the lens lock tape and the adhesive tape having an excellent adhesive strength, to prevent the axial misalignment of the spectacle lens when the spectacle lens is edged, which leads to a complicated edging process at a retail shop of spectacles. Alternatively, one adhesive tape may be used without the lens lock tape, but a specific structure of such an adhesive tape has not been known.

Exemplary aspects of the invention provide an adhesive sheet and an edging method capable of preventing an axial misalignment.

### Means for Solving the Problems

The present invention provides an adhesive sheet (also referred to as "the present adhesive sheet" hereinafter) which is suitable for fixing a lens in an edging machine and comprises:
(i) a base material layer (2a) which includes
   - a sheet member (2a2) formed of a resin foam and having an elasticity, defined as being compressible by ≥ 10 % of its uncompressed thickness when the adhesive sheet is clamped by the chucks of the edging machine and pressed, and, laminated thereon,
   - a film (2a1);
(ii) provided on the surface of the film (2a1), an adhesive layer (2b1) formed of an adhesive composition containing a (meth)acrylic ester-based polymer, a tackifier resin and a cross-linking agent; and
(iii) provided on the base material layer (2a) on the side opposite to the film (2a1), an adhesive coating layer (2b2).

Also, the inventio provides a lens edging method (also referred to as "the present edging method" hereinafter) comprising using the present adhesive sheet, wherein the adhesive sheet is provided between at least one of a pair of chucks and a lens in an edging machine with the adhesive layer (2b 1) facing the surface of the lens.

Yet further, there is provided an assembly, wherein an adhesive sheet of the present invention is provided between a chuck and a lens in an edging machine.

Preferred embodiments of the invention are as disclosed in the appended dependent claims and/or in the following detailed description.

When the present adhesive sheet is disposed between the at least one of the pair of chucks and the lens, and at least one of the pair of chucks and the lens are tightly attached to each other, the lens is fixed to the at least one of the pair of chucks of an edging machine.

Since the adhesive layer (2b1) is formed of the adhesive composition containing the (meth)acrylic ester-based polymer, the tackifier resin and the cross-linking agent, even a lens having small friction coefficient and having a surface treated with e.g. a fluorine-containing silane compound can be effectively prevented from an axial misalignment due to excellent adhesive strength thereof.

A mechanism for exhibiting an excellent axial-misalignment prevention effect is not clear. However, to prevent the axial misalignment when the adhesive sheet is closely attached to the lens, it is important that the adhesive sheet gets easily stuck on a tiny concavity and convexity on the surface of the lens in addition to that cohesive force of an adhesive itself is strong. In other words, anchoring strength is important. Since the tackifier resin is added to the (meth)acrylic ester-based polymer that has cohesive strength, the tackifier resin which is a relatively hard material is slightly bled. Consequently, an effect that the adhesive sheet gets easily stuck on a tiny concavity and convexity can be remarkably increased and the axial misalignment can be effectively prevented.

The present adhesive sheet includes a base material layer (2a) formed adjacent to the adhesive layer (2b1), including a sheet member (2a2) having an elasticity and a film (2a1) laminated on the sheet member, a surface of the film being provided with the adhesive layer (2b1).

Since the film (2a1) is laminated on the sheet member (2a2), an excessive deforming of the sheet member in a direction perpendicular to an axial direction of clamps of the edging machine can be suppressed and the axial misalignment of the spectacle lens during an edging process can be prevented.

The tackifier resin may be one type or a mixture of two or more types selected from a terpene resin, α-pinene, a terpene-phenol copolymer, a rosin and rosin derivative, a coumarone-indene resin, a hydrocarbon resin, an alkylphenol resin, a xylene resin, and an aromatic petroleum resin.

The adhesive layer (2b1) may exhibit an internal haze of ≥ 1% at a thickness of 20µm by (i) adding a tackifier resin incompatible with the (meth)acrylic ester-based polymer to the (meth)acrylic ester-based polymer or (ii) adding a tackifier resin compatible at least up to 3 parts by weight (also referred to as "pbw" hereinafter) with the (meth)acrylic ester-based polymer to 100 pbw of the (meth)acrylic ester-based polymer.

The sheet member (2a2) has an elasticity of ≥ 10 % to be compressible in a direction crossing a surface of the lens.

The above description of "having the elasticity of ≥ 10% to be compressible in the direction crossing the surface of the lens" means that the sheet member forming the adhesive sheet is compressible by ≥ 10% of the thickness thereof (the compressed sheet member has ≤ 90% of the original thickness of the sheet member) when the adhesive sheet is clamped by the holding members of the chucks of the edging machine and pressed. The original thickness of the sheet member before being compressed is preferably ≥ 0.5mm.

Since the sheet member of the base material layer has an elasticity of ≥ 10 % , the adhesive sheet can be deformed to conform with a shape of the lens even when the surface of the lens is convex or concave.

Accordingly, no lens lock tape is necessary when the pair of chucks interposes the lens therebetween for edging. The lens can be tightly fixed by only one type of the adhesive sheet, and the lens can be prevented from being slipped from the pair of chucks during edging.

Thus, an edging process can be simplified and therefore the edging process can be suitably performed at a retail shop.

The sheet member (2a2) of the present adhesive sheet is formed of a resin foam.

When formed of the resin foam, the sheet member is easily pressed and deformed when the adhesive sheet is clamped by the lens and the chucks. Thus, the surface of the adhesive sheet can be deformed depending on a convex and concave of the surface of the lens. Also, an area on which the adhesive sheet and the lens surface are attached is increased, so that the adhesive strength can be increased. Consequently, the adhesive strength of the adhesive sheet can be suitably obtained.

The resin foam may be an interconnected cell or a closed cell. The closed cell is preferably used because of air elasticity thereof. A foam of the resin may be a chemical foam by a chemical foaming agent or a physical foam by a physical forming agent.

The adhesive sheet may be as large as or larger than an abutting area of the lens holding member of the chuck. When the adhesive sheet is as large as or larger than the abutting area of the chuck, the chuck and the lens can be tightly attached to each other. Thus, the lens can be stably fixed during edging.

According to one aspect of the invention, a notch may be provided so that a printed mark on the lens is visually checkable.

The printed mark is an alignment mark as a horizontal fiducial mark when the lens is edged.

When the adhesive sheet is provided with the notch for visually checking the printed mark, for example, the adhesive sheet can be attached to the surface of the lens without covering the printed mark on the lens surface even when the adhesive sheet contains the foam layer and is opaque.

According to one aspect of the invention, a hole may be provided so that a center point on the lens is visually checkable.

When the adhesive sheet is provided with the hole for visually checking the center point (the printed mark), for example, the adhesive sheet can be attached to the surface of the lens without covering the center point on the surface of the lens even when the adhesive sheet contains a foamed layer and is opaque.

Thus, a chucking process can be simplified during edging.

Further, when the adhesive tape is attached to a convex surface of a progressing multifocal spectacle lens, a mark of a fitting point which has been applied can be prevented from being covered, and from being removed when the adhesive sheet is peeled off after edging.

In the present edging method, since the present adhesive sheet is used, the axial misalignment of the lens does not occur when the lens subjected to an antifouling process is edged and the edging process can be simplified.

In the present edging method, the lens to be edged has at least a convex surface, and the adhesive sheet is attached at least to the convex surface of the lens. Since the adhesive sheet attached to the convex surface of the lens is not easily wrinkled as compared with the adhesive sheet attached to the concave surface, the adhesive strength can be stably obtained.

### Brief Description of Drawings

Fig. 1 shows a first example of an adhesive sheet of the invention.
Fig. 2 shows the present adhesive sheet in use.
Fig. 3A is an example of a plan view of a spectacle lens.
Fig. 3B is an example of a cross sectional view of a spectacle lens.
Fig. 4 is an example of a schematic cross sectional view of a fixed portion of the spectacle lens .
Fig. 5 is an exploded schematic view of the illustration shown in Fig. 4.
Fig. 6 is a schematic cross sectional view of a fixed portion of a spectacle lens according to a modification.

### Explanation of Codes

1: spectacle lens, 2: adhesive sheet, 2a: base material layer, 2a1: film, 2a2: sheet member, 2b1: first coating layer (adhesive layer), 2b2: second coating layer, 3: edging machine, 4: protective film, 5: spectacle lens holding member, 11: center point, 12, 13: horizontal fiducial mark (alignment mark), 20: adhesive sheet, 23: center hole (hole, notch), 24, 25: notch, 51, 52: chuck, 60: grinding stone, 201: base material layer, 202: first coating layer (lens-side adhesive layer), 203: second coating layer (chuck-side adhesive layer), 510: lens holding member, 511: attachment, 511A: protrusion, 512: lens holder, 512A: lens holding surface, L: spectacle lens, L1: convex surface, L2: concave surface

### Best Mode for Carrying Out the Invention

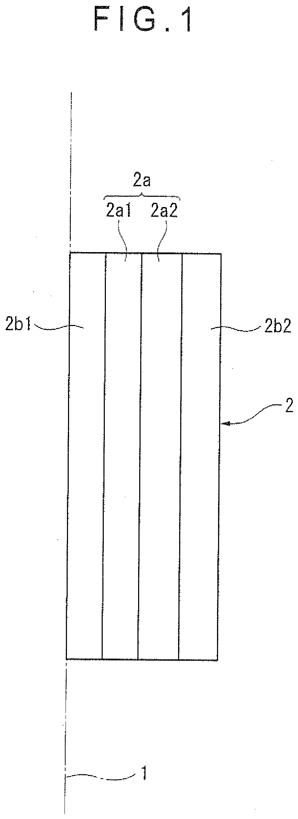

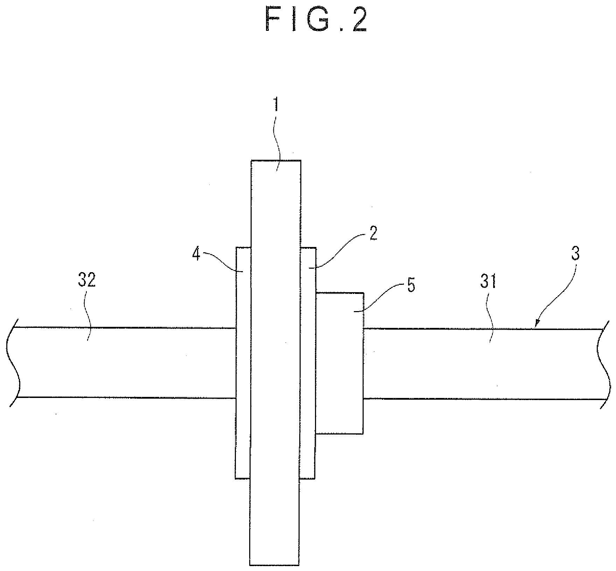

An embodiment of the invention will be described below with reference to Figs. 1 and 2, exemplifying a structure in which the adhesive sheet of the invention is applied to a spectacle lens.

Fig. 1 shows an example of a structure of the present adhesive sheet, and shows a spectacle lens 1 and an adhesive sheet 2 provided on the spectacle lens 1 for fixing the spectacle lens.

The adhesive sheet 2 for fixing the spectacle lens is a double-sided adhesive tape including a base material layer 2a, a first coating layer 2b1 provided on one surface of the base material layer 2a close to the lens, and a second coating layer 2b2 provided on the other surface of the base material layer 2a opposing to the one surface close to the lens.

The base material layer 2a includes an elastic sheet member 2a2 and a film 2a1 laminated on one surface of the sheet member 2a2.

The first coating layer 2b 1 forms an adhesive layer that is a primary part of the invention. The adhesive layer is formed of an adhesive composition containing a (meth)acrylic ester-based polymer, a tackifier resin, and a cross-linking agent.

A (meth)acrylic ester-based polymer is formed by polymerizing a monomer mixture primarily containing (meth)acrylic ester in a well-known polymerization method. The monomer mixture is formed by mixing a (meth)acrylic ester monomer and a functional group-containing monomer having a functional group subjected to a cross-linking reaction with a cross-linking agent, or by further adding a vinyl monomer thereto.

Examples of the (meth)acrylic ester monomer include methyl (meth)acrylate, ethyl (meth)acrylate, propyl (meth)acrylate, n-butyl (meth)acrylate, isobutyl (meth)acrylate, 2ethylhexyl (meth)acrylate, n-octyl (meth)acrylate, isooctyl (meth)acrylate, lauryl (meth)acrylate, stearyl (meth)acrylate, methoxyethyl (meth)acrylate, and ethoxymethyl (meth)acrylate, which may be used alone or in combination.

Examples of the functional group-containing monomer include a monomer having a carboxyl group such as (meth)acrylate, itaconic acid, maleic acid, fumaric acid, maleic anhydride, and â-carboxyethyl acrylate; a monomer having a hydroxyl group such as 2-hydroxyethyl (meth)acrylate, 4-hydroxybutyl (meth)acrylate, and diethylene glycol mono(meth)acrylate; a monomer having an epoxy group such as glycidyl (meth)acrylate; a monomer having an amino group such as aminomethyl (meth)acrylate, and dimethylaminoethyl (meth)acrylate; and a monomer having an amide group such as acrylamide, and methylol(meth)acrylamide, which may be used alone or in combination. Examples of the vinyl monomer include an aromatic vinyl monomer such as styrene, methylstyrene and vinyltoluene; vinyl acetate; vinyl chloride; and (meth)acrylonitrile, which may be copolymerized alone or in combination.

The tackifier resin is a mixture of one or more resin(s) selected from a terpene resin, á-pinene, a terpene-phenol copolymer, a rosin and rosin derivative, a coumarone-indene resin, a hydrocarbon resin, an alkylphenol resin, a xylene resin, and an aromatic petroleum resin.

An acrylic resin may be used in place of the mixture, or may be used together with the mixture.

Depending on a type and an additive amount of the tackifier resin, the first coating layer 2b 1 for forming an adhesive layer may have any one of the following structures: a structure (hereinafter referred to as a first structure) to add the tackifier resin compatible with the (meth)acrylic ester-based polymer to the (meth)acrylic ester-based polymer; a structure (hereinafter referred to as a second structure) to add the tackifier resin incompatible with the (meth)acrylic ester-based polymer to the (meth)acrylic ester-based polymer so that the internal haze of the 20µm-thick adhesive layer becomes >1%; and a structure (hereinafter referred to as a third structure) to add the tackifier resin that is compatible at least up to 3 pbw with the (meth)acrylic ester-based polymer to 100 pbw of the (meth)acrylic ester-based polymer so that the internal haze of the 20µm-thick adhesive layer becomes ≥ 1%. The third structure is most preferable because the axial misalignment of the spectacle lens 1 subjected to an antifouling process can be remarkably prevented. With the third arrangement, cohesive force is not lowered, and qualities of a substance itself such as stability and preservative quality are not deteriorated.

The cross-linking agent enhances cohesive force of the first coating layer 2b 1 for forming the adhesive layer by crosslinking the (meth)acrylic ester-based polymer. Examples of the cross-linking agent include an isocyanate compound, an epoxy compound, an aziridine compound, a metal chelate compound and an amine compound, which may be used alone or in combination. At this time, an additive amount of the cross-linking agent needs to be carefully considered. Too small additive amount of the cross-linking agent may cause short of cohesive force, and too large addictive amount of the cross-linking agent may cause short of elasticity. Sufficient properties cannot be obtained in either case.

The sheet member 2a2 for forming the base material layer 2a closely attaches the double-sided adhesive sheet 2, which is for fixing the spectacle lens, to a spectacle lens holding member 5 mounted on an edging machine 3 and to the spectacle lens 1. The sheet member 2a2 may be a sheet having elasticity such as urethane, polyolefin, and rubber. Especially, a foamed sheet is preferably used. When the sheet member 2a2 is too thin, the adhesive sheet 2 is not attached tightly enough because sufficient elasticity is not obtained, which causes an axial misalignment of the spectacle lens 1 during the edging process. When the sheet member 2a2 is unnecessarily too thick, a cost is increased and the sheet member 2a2 may not suitably follow a curved surface of the spectacle lens 1. The thickness of the sheet member 2a2 is preferably 100-2,000 µm, more preferably 300-1,300 µm. However, the thickness depends on a material of the sheet member 2a2.

The film 2a1 for forming the base material layer 2a is laminated on the sheet member 2a2 so as to suppress an excessive deforming of the sheet member 2a2 in a direction perpendicular to an axial direction of clamps 31 and 32 of the edging machine 3 and to prevent the axial misalignment of the spectacle lens 1 during the edging process (see Fig. 2). The film 2a1 may be a typical plastic film such as a polyester film, a polypropylene film, a polyethylene film, a polycarbonate film, a polyurethane film, a soft polyvinyl chloride film.

These films may be non-stretched films or stretched films. Since the spectacle lens 1 has the curved surface, a material and thickness of the film 2a1 are preferably so selected as to allow the film 2a1 to follow such a curved surface. The polyethylene film or the polypropylene film is preferably used. The thickness is preferably 6-300 µm, more preferably 50-200 µm. However, the thickness depends on materials of the sheet member 2a2 and the film 2a1.

The second coating layer 2b2 attaches the double-sided adhesive sheet 2 for fixing the spectacle lens to the spectacle lens holding member 5. At this time, a typical adhesive having a sufficient cohesive force, such as an acrylic adhesive, a natural rubber or synthetic rubber adhesive, or a silicone adhesive, is used.

Although the (meth)acrylic ester-based polymer is used for the adhesive layer for forming the first coating layer 2b1, a natural rubber, a synthetic rubber, a silicone rubber, and a urethane resin may be used in combination in place of the (meth)acrylic ester-based polymer. For forming the tackifier resin, e.g. an aliphatic petroleum resin or an alicyclic petroleum resin may be used in addition to the above-described tackifier resins.

The base material layer 2a includes the elastic sheet member 2a2 and the film 2a1 laminated on the one surface of the sheet member 2a2. The film 2a1 for use in the above arrangement may be a typical film such as a polyester film, a polypropylene film, a polyethylene film, a polycarbonate film, a polyurethane film, a soft polyvinyl chloride film, a synthetic rubber film, and a foamed film. These films may be non-stretched films or stretched films. For example, a paper, a coated paper, a laminated paper or a synthetic paper may also be used as the film 2a1. However, the film 2a1 is preferably transparent so that printed marks on the surface of the spectacle lens 1 is readable.

According to an alternative, the base material layer may be provided by laminating the film 2a1 on both surfaces of the sheet member 2a2 and the first coating layer 2b1 and the second coating layer 2b2 may be respectively provided on the surfaces of the film 2a1 as the base material layer to form the double-sided adhesive sheet for fixing the spectacle lens.

Next, a method for forming the double-sided adhesive sheet 2 for fixing the spectacle lens will be described below.

First, the (meth)acrylic ester-based polymer, the tackifier resin, and the cross-linking agent are mixed in predetermined proportions, and diluted with an organic solvent to prepare a first coating liquid. Then, the first coating liquid is coated on a release film that is releasable from the first coating layer 2b1 and dried to form the adhesive layer contacting the spectacle lens 1.

Similarly, for example, the acrylic adhesive and the cross-linking agent are mixed in predetermined proportions and diluted with an organic solvent to prepare a second coating liquid. Then, the first coating liquid is coated on a release film that is releasable from the second coating layer 2b2 and dried to form the adhesive layer contacting the spectacle lens holding member 5.

Next, the base material layer 2a is prepared by laminating the film 2a1 on one surface of the sheet member 2a2. Although the base material layer 2a can be formed by attaching the sheet member 2a2 to the film 2a1 by an adhesive, a cost is increased and properties of the base material layer 2a may be undesirably affected depending on an adhesive. Thus, the film 2a1 is preferably laminated by thermocompression-bonding without using any adhesive or is laminated by melt extrusion. To establish a tighter contact of the base material layer 2a with the first coating layer 2b 1 and the second coating layer 2b2, an easy adhesion treatment such as a corona treatment may be performed on the surface of the base material layer 2a prepared as described above.

The adhesive layer coated by the first coating liquid is attached to the surface of the film 2a1 of the base material layer 2a, the other adhesive layer coated by the second coating liquid is attached to the surface of the sheet member 2a2 of the base material layer 2a, and the both adhesive layers are subjected to aging in order to prepare the double-sided adhesive sheet 2 for fixing the spectacle lens in which the release films are respectively laminated on the first coating layer 2b1 and the second coating layer 2b2.

The thickness of the first coating layer 2b1 and the second coating layer 2b2 is 1-100 µm, preferably 3-50 µm. The adhesive force is not sufficient when the coating layers are too thin, and cohesive failure may be caused when the coating layers are too thick.

As described above, by laminating a releasing surface of the release film on the adhesive layer, products of effective forms can be provided. When the adhesive sheet 2 for fixing the spectacle lens is punched, the release film may serve as a carrier film. Examples of the release film may include a film releasable from a polyethylene adhesive layer, a film coated with the releasing agent such as silicone or fluorocarbon, and a film formed by attaching releasable films together. The surface of the release film is preferably flat and smooth in order not to affect the first coating layer 2b1 and the second layer 2b2. Also, it is preferable that releasing components are not transferred to the first coating layer 2b1 and the second coating layer 2b2 to avoid effects on adherence. Further, when the adhesive sheet 2 is to be punched, the release film is required to have a certain level of thickness and strength as a film in order to prevent fracturing at the time of half cutting.

It should be noted that the method for forming the first coating layer 2b1 and the second coating layer 2b2 is not limited to the method as described above. The first coating liquid and the second coating liquid may be used as emulsion, or the layers 2b1 and 2b2 may be directly formed on the base material layer 2a. Also, any well-known method (for example, a gravure coating method, a wire bar coating method, a roll coating method, an air-knife coating method, a reverse coating method, a kiss coating method) may be used as the forming method.

Next, description will be made below on fixing of spectacle lens 1 to the edging machine 3 by using the adhesive sheet 2 for fixing the spectacle lens.

As shown in Figs. 1 and 2, the first coating layer 2b1 of the double-sided adhesive sheet 2 for fixing the spectacle lens is attached to the surface of the spectacle lens 1, and a clamp 31 is pressed to one surface of the spectacle lens 1 via the double-sided adhesive sheet 2 for fixing the spectacle lens and the spectacle lens holding member 5.

The clamp 32 is pressed to the spectacle lens 1 via, for instance, a protective film 4 (see Fig. 2), or directly pressed to the spectacle lens 1 on a surface of the spectacle lens 1 opposing to the adhesive surface of the adhesive sheet 2. Then, the spectacle lens 1 is fixed to the edging machine 3 while being sandwiched by the clamps 31 and 32.

Thus, the following advantages are achieved by the present invention.
(1) The adhesive sheet 2 includes the first coating layer 2b1 formed as the adhesive layer to face the lens surface. Since the adhesive layer is formed of the adhesive composition containing the (meth)acrylic ester-based polymer, the tackifier resin and the cross-linking agent, even a lens having small friction coefficient and having a surface treated by e.g. a fluorine-containing silane compound can be effectively prevented from the axial misalignment due to excellent adherence.
(2) The adhesive sheet 2 includes the base material layer 2a formed adjacent to the first coating layer 2b1 for forming the adhesive layer. The base material layer 2a includes the elastic sheet member 2a2; and the film 2a1 laminated on the sheet member 2a2 and having the first coating layer 2b1 on one surface thereof. With the arrangement in which the film 2a1 is laminated on the sheet member 2a2, the excessive deforming of the sheet member 2a2 in the direction perpendicular to the axial direction of the clamps 31 and 32 of the edging machine 3 is suppressed, and the axial misalignment of the spectacle lens 1 during the edging process can be prevented.

Next, examples and comparisons will be described below to show the advantages of the present invention.

### Example 1

100 pbw of an acrylic adhesive SZ-2647 (manufactured by Nippon Carbide Industries Co., Inc.) in the form of a solid content as the (meth)acrylic ester-based polymer, 5 pbw of YS Polyster T145 (manufactured by Yasuhara Chemical Co., Ltd.) as the tackifier resin compatible with the acrylic adhesive SZ-2647 by a small amount (for example, 3 pbw per 100 pbw of the (meth)acrylic ester-based polymer), and 3 pbw of a coronate L45 (manufactured by Nippon Polyurethene Ind. Co., Ltd.) in the form of a solid content as the cross-linking agent were mixed and diluted with toluene until the solid content was reduced to 20% to prepare the first coating liquid. The first coating liquid was coated on a releasing surface of a biaxially-stretched polyester film having 50 µm thickness, the releasing surface having been provided by release-treating one surface of the polyester film with a silicone-based agent, and dried at 100°C for three minutes to form the 20 µm-thick first coating layer contacting the spectacle lens.

Similarly, 100 pbw of the acrylic adhesive SZ-2647 as a solid content and, 3 pbw of the cross-linking agent coronate L45 as a solid content were mixed and diluted with toluene (an organic solvent) until the solid content was reduced to 20% to prepare the second coating liquid. The second coating liquid was coated on a releasing surface of a biaxially-stretched polyester film having 50µm thickness, the releasing surface having been provided by release-treating one surface of the polyester film with the silicone-based agent, and dried at 100 °C for three minutes to form the 20µm-thick second coating layer contacting the spectacle lens holding member 5.

Next, PORON H-48 (manufactured by Inoac Corporation), which is an elastic urethane foamed sheet having 500 µm thickness, was used as the sheet member 2a2, and a polyethylene film O (manufactured by Okura Industrial Co., Ltd.) was used as the film 2a1. The sheet member 2a2 and the film 2a1 were laminated by melt extrusion so as to form the base material layer 2a.

After the first coating layer 2b1 as the adhesive layer was attached to the film 2a1 and the second coating layer 2b2 was attached to the sheet member 2a2, the layers 2b1 and 2b2 were aged at ordinary temperature for five days. Consequently, the adhesive sheet 2 for fixing the spectacle lens in which the release films were laminated on the first coating layer 2b1 and the second coating layer 2b2 was obtained.

### Example 2

100 pbw of the acrylic adhesive SZ-2647 in the form of a solid content as the (meth)acrylic ester-based polymer, 7 pbw of KE311 (manufactured by Arakawa Chemical Industries, Ltd.) as the tackifier resin incompatible with the acrylic adhesive SZ-2647, 3 pbw of coronate L45 in the form of a solid content as the cross-linking agent were mixed and diluted with toluene until the solid content was reduced to 20% to prepare the first coating liquid. By arranging and forming the adhesive sheet 2 for fixing the spectacle lens in the same manner as the example 1, except for the first coating liquid, the adhesive sheet 2 for fixing the spectacle lens in which the release films were laminated on the first coating layer 2b1 and the second coating layer 2b2 was obtained.

### Example 3

100 pbw of the acrylic adhesive SZ-2647 in the form of a solid content as the (meth)acrylic ester-based polymer, 20 pbw of YS Polyster T145 as the tackifier resin, 3 pbw of coronate L45 in the form of a solid content as the cross-linking agent were mixed and diluted with toluene until the solid content was reduced to 20% to prepare the first coating liquid. By arranging and forming the adhesive sheet 2 for fixing the spectacle lens in the same manner as the example 1, except for the first coating liquid, the adhesive sheet 2 for fixing the spectacle lens in which the release films were laminated on the first coating layer 2b1 and the second coating layer 2b2 was obtained.

### Comparison 1

100 pbw of the acrylic adhesive SZ-2647 as the (meth)acrylic ester-based polymer, and 3 pbw of coronate L45 in the form of a solid content as the cross-linking agent were mixed and diluted with toluene (organic solvent) until the solid content was reduced to 20% to prepare the first coating liquid. By arranging and forming the adhesive sheet 2 for fixing the spectacle lens in the same manner as the example 1, except for the first coating liquid, the adhesive sheet 2 for fixing the spectacle lens in which the release films were laminated on the first coating layer 2b1 and the second coating layer 2b2 was obtained.

### Comparison 2

100 pbw of an acrylic adhesive Nissetsu PE-118(manufactured by Nippon Carbide Industries Co., Inc.) in the form of a solid content as the (meth)acrylic ester-based polymer, 30 pbw of YS Polyster T145 as the tackifier resin compatible with the acrylic adhesive Nissetsu PE-118, and 3 pbw of coronate L45 in the form of a solid content as the cross-linking agent were mixed and diluted with toluene (organic solvent) until the solid content was reduced to 20% to prepare the first coating liquid. By arranging and forming the adhesive sheet 2 for fixing the spectacle lens in the same manner as the example 1, except for the first coating liquid, the adhesive sheet 2 for fixing the spectacle lens in which the release films were laminated on the first coating layer 2b1 and the second coating layer 2b2 was obtained.

### Comparison 3

100 pbw of the acrylic adhesive SZ-2647 in the form of a solid content as the (meth)acrylic ester-based polymer, 20 pbw of YS Polyster S145 (manufactured by Yasuhara Chemical Co., Ltd.) as the tackifier resin compatible with the acrylic adhesive SZ-2647, and 3 pbw of coronate L45 in the form of a solid content as the cross-linking agent were mixed and diluted with toluene (organic solvent) until the solid content was reduced to 20% to prepare the first coating liquid. By arranging and forming the adhesive sheet 2 for fixing the spectacle lens in the same manner as the example 1, except for the first coating liquid, the adhesive sheet 2 for fixing the spectacle lens in which the release films were laminated on the first coating layer 2b1 and the second coating layer 2b2 was obtained.

### Comparison 4

100 pbw of the acrylic adhesive SZ-2647 in the form of a solid content as the (meth)acrylic ester-based polymer, 2 pbw of YS Polyster T145 as the tackifier resin, and 3 pbw of coronate L45 in the form of a solid content as the cross-linking agent were mixed and diluted with toluene (organic solvent) until the solid content was reduced to 20% to prepare the first coating liquid. By arranging and forming the adhesive sheet 2 for fixing the spectacle lens in the same manner as the example 1, except for the first coating liquid, the adhesive sheet 2 for fixing the spectacle lens in which the release films were laminated on the first coating layer 2b1 and the second coating layer 2b2 was obtained.

### (1) Measurement of an internal haze

The release film laminated with the 20µm-thick first coating layer according to each of the examples 1-3 and the comparisons 1-4 was sandwiched between 70µm-thick polycarbonate films (Pure-Ace: manufactured by Teijin Ltd.), whereby a film used as a sample for measuring an internal haze of the first coating layer was provided. A haze caused by the Pure-Ace was ignorably small. A haze meter NDH2000 (manufactured by Nippon Denshoku Industries Co., Ltd.) was used for measuring the internal haze.

### (2) Measurement of axial misalignment

### Spectacle lens for test:

A spectacle plastic lens on which an antifouling layer formed of a fluorine-containing silane compound was formed ("Seiko Super-Sovereign Raku Care Coat": manufactured by Seiko Epson Corporation, having powers of S=-7.00D and C=-3.00D) Test method:
First, the spectacle lens for test was prepared and set to a fixing jig. At this time, the lens for astigmatism was fixed such that an astigmatic axis extended in a predetermined direction (for example, 180°). Also, the lens for non-astigmatism was fixed such that a straight line passing through an optical center of the spectacle lens extended in a predetermined direction (for example, 180°). A half-eye type frame having a large aspect ratio was prepared to be served as a reference frame.

Next, the double-adhesive sheet for fixing the spectacle lens according to each of the examples and comparisons was cut to have a round shape having a diameter of 25 mm and attached to the surface of the spectacle lens for test. After attaching the adhesive sheet to a typical spectacle lens holding member by a blocker, the spectacle lens was fixed to the edging machine ("LE-8080": manufactured by NIDEK Co., Ltd.) and subjected to edging based on a predetermined frame data.

The lens having been subjected to aging was set in the reference frame and the axial misalignment of the astigmatic axis was measured by a lens meter. When the straight line passing through the optical center of the lens was ruled, a misalignment angle between such ruled line and a horizontal line passing through the optical axis of the reference frame was measured.

### Evaluation method:

When the spectacle lens for test was edged to have a predetermined frame shape using the edging machine 3, whether or not the axial misalignment was caused by a slip of the clamps 31 and 32 and the surface of the spectacle lens for test was observed. An evaluation was made by calculating a rate of lenses that exhibited an axial misalignment of more than ± 2° from a tolerable range out of 10 spectacle lens for test (a rate of axial misalignment occurrence).

The results are shown in Table 1.

As is clear from Table 1, by using the adhesive according to the present adhesive sheet to attachment portion of the lens, misalignment can be prevented during the edging. Especially, by adding an appropriate amount of the tackifier resin to the (meth)acrylic ester-based polymer, even the lens having small coefficient of friction and having a surface treated with e.g. the fluorine-containing silane compound can be effectively prevented from the axial misalignment.

**[Table 1]**

| | Internal Haze (%) | Axial Misalignment Occurrence (%) |
|---|---|---|
| Example 1 | 0.45 | 10 |
| Example 2 | 4.03 | 0 |
| Example 3 | 2.18 | 0 |
| Comparison 1 | 0.12 | 100 |
| Comparison 2 | 0.28 | 40 |
| Comparison 3 | 0.33 | 40 |
| Comparison 4 | 0.26 | 40 |

Next, with reference to the attached drawings, a second embodiment (involving an adhesive sheet 20 not according to the claimed invention) exemplifies an arrangement in which the invention is applied to a spectacle lens.

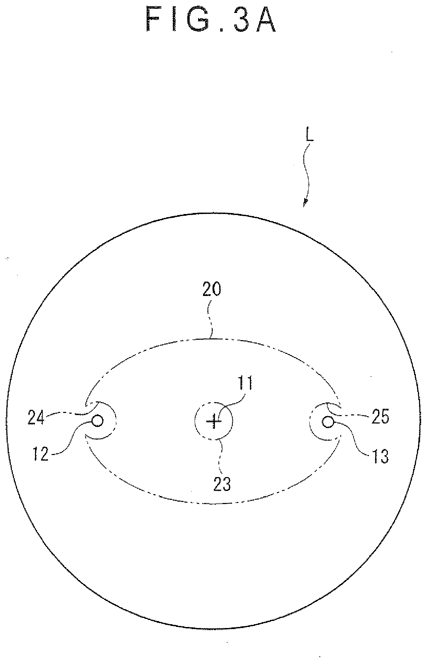

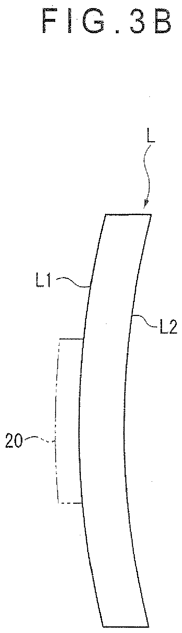

Figs. 3A and 3B illustrate a spectacle lens L to which the adhesive sheet is attached. Fig. 3A is a plan view and Fig. 3B is a cross sectional view.

In these drawings, the spectacle lens L is a meniscus lens having a convex surface L1 that is one surface (outer surface) and a concave surface L2 that is the other surface (surface close to eyes of a user). The spectacle lens L is a lens before edging (lens shaping process) and is approximately circular in plan view. The lens has a diameter of approximately 75 mm. The spectacle lens is, for example, a spectacle lens for astigmatism.

A material of the spectacle lens may be inorganic glass or plastic as long as the material can be transparent. Examples of the plastic may include a diethylene glycol bisallyl carbonate (CR-39) resin, a polyurethane resin, a thiourethane resin, a polycarbonate resin, and an acrylic resin.

The topmost surface of the spectacle lens L is subjected to an antifouling process in order to prevent the lens from being stained and to facilitate removal of a stain from the lens. In other words, an antifouling layer having water-shedding property and oil-shedding property is formed on the topmost surface of the spectacle lens L. The antifouling layer is preferably formed after the antireflective layer is formed when the spectacle lens L is formed of glass. When the spectacle lens L is formed of plastic, the antifouling layer is preferably formed after a hard coating layer is provided or after the hard coating layer and the antireflective layer are provided.

The antifouling layer is preferably based on a fluorine-containing silane compound in order to lower surface tension. For example, the fluorine-containing silane compound of formula (1) may be used: 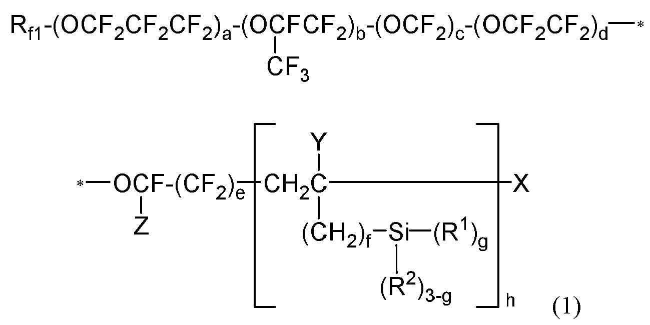 wherein Rn is linear or branched perfluoroalkyl, preferably CF₃-,C₂F₅-,C₃F₇-; X is H, Br or I; Y is H or lower alkyl; Z is F or trifluoromethyl; R¹ is OH or a hydrolyzable group; R² is H or a monovalent hydrocarbon group; a, b, c, d and e each are an integer of 0, 1 or more with (a+b+c+d+e) ≥ 1; the order of the groups of repeating units enclosed in parentheses with a, b, c, d, and e is not limited; f is 0, 1 or 2; g is 1, 2 or 3; and h is an integer of ≥ 1.

Also, the fluorine-containing silane compound of formula (2) may be used: 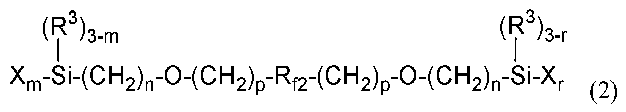 wherein R_{f2} contains a unit of the formula -(CₖF₂ₖ)O- (wherein k is an integer of 1-6) and is a divalent radical having a structure of linear and not branched perfluoro polyalkylene ether; R³ is a monovalent C₁₋₈-hydrocarbon group; p is 0, 1 or 2; n is an integer of 1-5; _{and} m and r each are 2 or 3.

To form the antifouling layer on the spectacle lens by using the aforementioned fluorine-containing silane compound, a method of dissolving the compound in an organic solvent and coating over a surface of the spectacle lens can be adopted. Examples of the coating method may include a dipping method, a spin coat method, a spray method, a flow method, a doctor blade method, a roll coat coating, a gravure coat coating, and a curtain flow coating. Examples of the organic solvent may include perfluorohexane, perfluoromethylcyclohexane, and perfluoro-1, 3-dimethylcyclohexane.

When being diluted with an organic solvent, the concentration of the fluorine-containing silane compound is preferably 0.03-1 mass%. When the concentration of the compound is excessively low, a satisfactory antifouling effect cannot be obtained since it is difficult to form the antifouling layer having a sufficient thickness. On the other hand, when the concentration of the compound is excessively high, a film thickness of the antifouling layer may become too large. Thus, after the compound is coated, a rinse operation for eliminating coating unevenness may be required.

At this time, as the coating method of the fluorine-containing silane compound, a vacuum evaporation method may also be adopted according to which the fluorine-containing silane compound is evaporated in a vacuum tank and then deposited on a surface of the spectacle lens. In the vacuum evaporation method, a material compound can be used in a high concentration or without a diluting solvent.

The thickness of the antifouling layer is not particularly limited, but preferably is 0.001-0.5µm, more preferably 0.001-0.03µm. When the film thickness of the antifouling layer is excessively small, the antifouling effect is hardly obtained. When the thickness thereof is excessively large, the surface unfavorably becomes sticky. Further, when the antifouling layer is provided on a surface of the antireflective layer, the thickness of the antifouling layer of ≥ 0.03 µm may unfavorably deteriorate an antireflective effect.

As shown in Figs. 3A and 3B, alignment marks are printed on the convex surface L1 of the spectacle lens on which the antifouling layer is formed and the marks serve as horizontal fiducial marks during edging. The printed marks are a center point 11 representing an optical center, horizontal fiducial marks 12 and 13 showing a horizontal direction of the spectacle lens set in a predetermined cylinder axis based on a prescription. When printing these marks 12 and 13, an ink removable by an organic solvent such as alcohol is typically used. The alignment marks as horizontal fiducial marks may be represented by e.g. a point, line or mark.

The center point 11 is printed at the optical center of the spectacle lens L. For example, two lines that are approximately 3 mm long are printed to shape a cross in the exemplary embodiment. The horizontal fiducial marks 12 and 13 are printed on a horizontal line that passes the center point 11. For example, circles having approximately 2mm diameters are printed at positions interposing the center 11 therebetween and spaced apart from the center 11 by 16 mm in the exemplary embodiment.

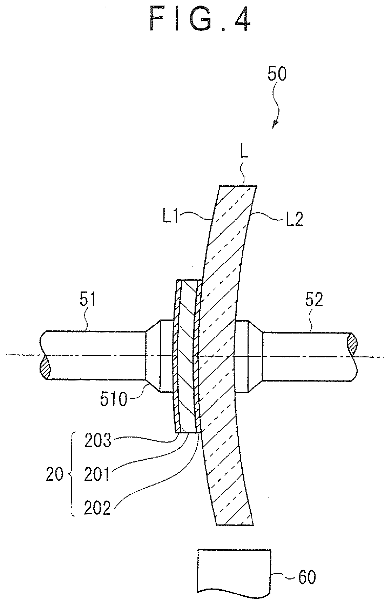

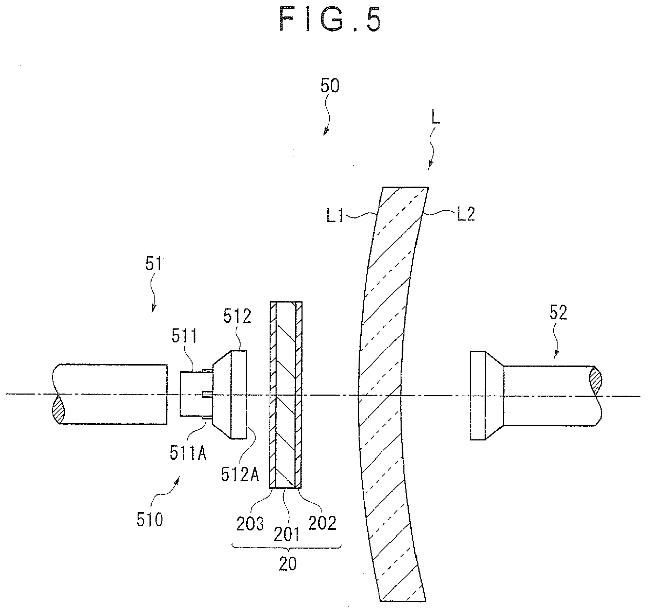

Fig. 4 is a schematic cross sectional view of a fixed portion of the spectacle lens L to be subjected to edging, and Fig. 5 is an exploded schematic view of the fixed portion of the spectacle lens L. In the drawings, a dimension and a ratio of components are different from actual ones thereof to facilitate understanding.

With regard to Fig. 4, the spectacle lens L is processed by using the edging machine 50. The edging machine 50 includes; a pair of fixing equipments which are a chuck 51 as a first fixing equipment and a chuck 52 as a second fixing equipments; a grinding stone 60 that is pressed to an edge of the spectacle lens while being rotated for grinding; a clamp axis; a driving unit; a driving controller that controls an operation of a driving unit; a storage that stores e.g. a frame data; and a feed-water nozzle.

The chuck 51 is provided with a lens holding member 510 made of resin and attached to an end thereof and has a function for chucking (fixing) the spectacle lens L via the adhesive sheet 20 (not according to the claimed invention) from one side. The other chuck 52 is provided with an elastic body such as a rubber on the end thereof and pressed to the concave surface L2 of the spectacle lens L for fixing the spectacle lens L.

In other words, the spectacle lens L in which the antifouling layer is formed on the convex surface L1 is fixed between the fixing equipments including the pair of chucks 51 and 52. Specifically, the spectacle lens L is pressed to be fixed by the chucks 51 and 52 such that the convex surface L1 faces the chuck 51. The center axis of the fixing equipments (the chucks 51 and 52) is positioned at a machining center of the spectacle lens L.

The adhesive sheet 20 is interposed between the convex surface L1 and the chuck 51 to cover the machining center of the spectacle lens L.

The adhesive sheet 20 includes a base material layer 201 having an elasticity of > 10% compressible in a direction crossing the surface of the lens, an adhesive layer 202 as the first coating layer provided on the base material layer 201 close to the lens, an adhesive layer 203 as the second coating layer provided on the base material layer 201 close to the chuck 51.

The chucks 51 and 52 are connected to their clamp axes, an extending amount of the chucks toward the spectacle lens L and rotation thereof controlled by operating the driving unit controlled by the driving controller. The feed-water nozzle supplies water to edge of the spectacle lens L during grinding.

Examples of the material for the base material layer 201 may be a polyolefin-type resin such as polyethylene and polypropylene; polyesters such as polystyrene and polyethylene terephthalate; a thermoplastic resin such as polyvinyl acetate, ethylene vinyl acetate, acrylonitrile butadiene styrene (ABS), a polycarbonate, a polyvinyl chloride resin, a polyamide, a polyimide, an acetate, and 4-ethylene fluoride; a thermosetting resin such as an epoxy resin; rubber-type resins such as soft rubber, and hard rubber; and materials for reinforcing these materials, for example, a resin including fibrous material.

The base material layer 201 needs to have an elasticity of ≥ 10 % so as to be compressible in a direction crossing the surface of the lens. In other words, when the adhesive sheet 20 is clamped by the chuck 51 and the convex surface L1 for edging, the thickness of the base material layer 201 is compressed to be < 90% of the original thickness thereof. In order for the base material layer 201 to have such a compressive characteristics, it is preferable that e.g. the resins as described above are foamed by an appropriate foaming agent.

The foaming agent is preferably used in foaming. Examples of the foaming agent includes a volatile foaming agent and a chemical foaming agent. The volatile foaming agent is a volatile liquid or solid that evaporates in accordance with pressure release of high-pressure extrusion by an extruder. For example, the volatile foaming agent may be pentane, butane, fluorine compound, water, and alcohol. The chemical foaming agent is a compound that is thermally discomposed when heated and generates cracked gas. For example, the chemical foaming agent may be azodicarbonamide(ADCA) and sodium bicarbonate.

Any foaming magnification is usable. It is only necessary that the contained amount of the foaming agent or foaming method is controlled by a known method so that the base material layer 201 has the elasticity of ≥ 10 % to be compressible in the direction crossing the surface of the lens.

Even when the base material layer 201 is a foam, it is not necessary that the entire base material layer 201 is a foam layer. The base material layer 201 may be structured such that a foam layer and a non-foam layer are laminated.

A compressibility ratio of the base material layer 201 is preferably ≥ 15%, more preferably ≥ 20%, most preferably ≥ 30% so that the surface of the adhesive sheet 20 can follow a concavity and convexity of the surface of the lens. However, when the compressibility ratio is too high, the base material is so thin as to lose cushioning characteristics and the lens may be scratched or cracked. Thus, the compressibility ratio is preferably ≤ 50%.

The thickness of the base material layer 201 is preferably ≥ 0.5mm, more preferably ≥ 0.6mm, most preferably ≥ 0.8mm so that the surface of the adhesive sheet 20 can follow a concavity and convexity of the surface of the lens. The thicker the base material layer is, the more likely the lens is contorted and axially misaligned. Thus, the thickness is preferably ≤ 1.0mm.

As for the strength of the base material layer 201, it is preferable that the tensile strength as defined in JIS K 7127 "plastic film/sheet tensile test method" ("JIS Handbook on Steel"; Japanese Standards Association, April. 12, 1989) is 1 kgf/mm² (9.8 N/mm²) or more. Further, as for the elastic modulus of traction of the base material layer 201, it is preferable that a value of the elastic modulus of traction Em as defined in the aforementioned JIS K 7127 "plastic film/sheet tensile test method" is 1-450 kgf/mm² (9.8-4410 N/mm²). When the value of the elastic modulus of traction of the base material layer 201 is excessively small, a large elongation is obtained by a small load. As a result, an axial misalignment may occur. On the other hand, when the value of the elastic modulus of traction the base material layer 201 is excessively large, the base material layer may not follow the lens shape.

The adhesive layer 202 close to the lens is formed of an adhesive composition containing a (meth)acrylic ester-based polymer, a tackifier resin and a cross-linker.

The adhesive layer 202 close to the lens needs to have a sufficient adhesive strength against the antifouling layer having a low surface tension. When a polyethylene terephthalate plate of which surface is treated with a fluorine-modified silicone releasing agent is used as a test plate in an adhesive force test method based on 180°-peeling method as defined in JIS Z 0237 "adhesive tape/adhesive sheet test method", the adhesive strength needs to be ≥ 4 gf (0.0392 N), preferably ≥ 6 gf (0.0588N). The adhesive strength is preferably ≤ 400 gf (3.92 N), but is not limited thereto. However, when the adhesive strength of the adhesive sheet is excessively large, e.g. the antireflective layer which is formed on the surface of the lens may be peeled off.

An outline of the adhesive strength test method based on the 180°-peeling method as defined in JISZ 0237 "adhesive tape/adhesive sheet test method" is described below. The test is performed under the following standard condition: a temperature in a test place of 23±2°C; and a relative humidity of 65±5%. A sample must be left for ≥ 2 hours in an atmosphere of the standard condition. The test piece is cut into a tape having a width of ≥ 25 mm or a sheet having a width of 25 mm. When the tape is < 25 mm wide, the tape is used within its original width. Three test pieces each having such width as described above and a length of approximately 250 mm are selected. A tensile testing machine as defined in JIS B 7721 is used. As for a test plate, an SUS304 or SUS302 steel plate having a thickness of 1.5-20 mm as defined in JIS G 4305 is cut to have a width of 50mm and a length of 125 mm for use. A hand-operated roller is used as a crimping apparatus. A surface of the hand-operated roller is covered with a rubber layer having a spring hardness of 80±5 Hs and a thickness of approximately 6mm as defined in JIS K 6301. The hand-operated roller has a width of approximately 45mm, a diameter of approximately 83 mm, and a mass of 2000±50 g. The test pieces are placed on a cleaned test plate such that adhesive surfaces thereof face downward, and are aligned with one another at one ends thereof. The test pieces are positioned at a center portion of the test plate. Remaining portions of the test pieces each having 125 mm in length of the test pieces are set free. The adhesive surfaces of the remaining portions are applied with talc in a powder form or attached with a paper. The roller is reciprocated once on the test pieces at a speed of approximately 300 mm/min for crimping the test pieces. The remaining portion of each of the test pieces is folded at an angle of 180° for 20-40 minutes after such crimping. Approximately 25 mm of each of the test piece is peeled off. Then, each of the test pieces is clamped by an upper chuck while the test plate is clamped by a lower chuck. The test pieces and the test plate are peeled off at a speed of 300±30 mm/min. Every time approximately 20 mm of the test piece is peeled off, strength thereof is read four times in total. The test is conducted on three test pieces. An average value of the resultant 12 measurements on the three test pieces is obtained and then the average value is converted to a value per 10 mm in width based on a proportional calculation.

A test method for obtaining the adhesive strength of the adhesive sheet 20 is in accordance with the aforementioned adhesive strength test method based on the 180°-peeling method as defined in JIS Z 0237 "adhesive tape/adhesive sheet test method". However, a polyethylene terephthalate plate having a thickness of 3 mm which has been subjected to a surface treatment with a fluorine-modified silicone releasing agent is used as a test plate. A specific manufacturing method of the test plate will be described below. First, a fluorine-modified silicone releasing agent is uniformly applied onto a surface of a polyethylene terephthalate plate having dimensions of 3 mm thick, 50 mm wide and 125 mm long by, for example, a bar coat method, in an amount of 0.3-0.6 g/m². Then, the polyethylene terephthalate plate coated with the fluorine-modified silicone releasing agent is heated at approximately 150°C for approximately 60 seconds. After such heating is terminated, a side of the polyethylene terephthalate plate covered with the fluorine-modified silicone releasing agent is applied with any one of ethanol, isopropyl alcohol and acetone as a cleaning liquid. Then, the cleaning liquid is wiped off by, for example, a gauze. The applying and wiping off of the cleaning liquid are repeated at least three times until the surface of the test plate is confirmed to be clean by a visual check. As the fluorine-modified silicone releasing agent, X-70-20 manufactured by Shin-Etsu Chemical Co. Ltd. is used.

Examples of the adhesive having a strong adhesive force include rubber-type adhesives such as natural rubber (polyisoprene), styrene-butadiene rubber, butyl rubber, and polyisobutylene; acrylic adhesives; silicone-type adhesives; and vinyl acetate-type adhesives.

The thickness of the antifouling layer 202 close to the lens is preferably 1-100 µm and more preferably 3-50 µm. When the thickness of the adhesive layer is less than 1µm, the adhesive strength is not sufficient. When the thickness of the adhesive layer is > 100 µm, the adhesive sheet may be easily misaligned in a direction parallel to the lens surface when the lens is chuck (fixed), and a positioning of the lens may not be stable during edging.

The adhesive layer 203 close to the chuck is not required to have a particularly strong adhesive force as long as the adhesive layer 203 can be attached to the resin lens holding member 510 provided on the end of the chuck 51. Thus, the same adhesive used for the adhesive layer 202 close to the lens may be used, or other adhesives may be used. The thickness of the adhesive layer 203 may also be the same as that of the adhesive layer 202 close to the lens or may be different from that of the adhesive layer 203.

In other words, the adhesive layers 202 and 203 may be provided on both sides of the base material layer 201 as a primary portion.

When the adhesive strength is 4-8 gf (0.0392-0.0784 N), the area of the adhesive sheet 20 may be approximately ≥ 700 mm². An outer shape of the adhesive sheet 20 may be any shape as long as the printed marks can be visually checked. Similarly, when the adhesive strength is ≥ 8 gf (0.0784 N), the area of the adhesive sheet 20 may be approximately ≥ 400 mm². However, the area of the adhesive sheet 20 is preferably larger than an area of the sheet 20 attached to the lens holding member 510.

When the adhesive sheet 20 is shaped such that a portion protrudes from a predetermined edge machining shape of the spectacle lens L to be grinded, the sheet may be peeled off by the grinding stone 60 and grinding water during edging. Thus, the adhesive sheet 20 preferably has a smaller outer shape than the predetermined edge machining shape of the spectacle lens L to be ground.

In recent years, a half-eye type frame having a large aspect ratio has been widely used. For such a frame, the adhesive sheet 20 preferably has a vertical width of ≤ 300 mm, more preferably approximately 25 mm.

The adhesive sheet 20 has the approximately 20µm-thick lens-side adhesive layer 202 formed of an acrylic adhesive on one side of the approximately 0.8mm-thick base material layer 201 including chloroprene rubber foam (neoprene foam), and the chuck-side adhesive layer 203 including the rubber adhesive on the other side of the base material layer 201. The adhesive sheet 20 is shaped such that at least the printed marks (the center point 11 and the horizontal fiducial marks 12 and 13) on the convex surface L1 of the spectacle lens L is not covered with the adhesive sheet 20 when the adhesive sheet 20 is attached on the convex surface L1 of the spectacle lens L on which the antifouling layer is formed as shown by a dashed and dotted line in Fig. 3A illustrating the spectacle lens L.

The adhesive sheet 20 preferably has an elliptical shape having a vertical width of 25 mm and a horizontal width of 40 mm. A center hole 23 is provided as a circular notch portion penetrating front and back surfaces of the adhesive sheet 20 at a center portion of the elliptical shape. The adhesive sheet 20 also has notches 24 and 25 having a substantially circular shape and provided on outer circumference on a horizontal line in a direction of a horizontal width of the elliptical shape. Thus, when the lens holding member 510 is attached to the convex surface L1 of the spectacle lens L, the spectacle lens L can be set in an axis alignment device so that the spectacle lens L can be fixed on a predetermined position while the printed marks on the convex surface is being visually checked, even though the base material layer 201 is a foam body and opaque. In other words, a horizontal leveling can be performed.

Obviously, the notches 24 and 25 are not necessary when the adhesive sheet 20 is made of a material that is flexible and transparent such as a polyvinyl chloride resin. (However, the center hole 23 is necessary for preventing the printed marks from being evanished.)

The center hole 23 is used for visually checking the center point 11 when the adhesive sheet 20 is attached to the convex surface L1 of the spectacle lens L, and the notches 24 and 25 are used for visually checking the horizontal fiducial marks 12 and 13. To correspond to the respective printed marks on the convex surface L1 of the spectacle lens L, for example, a diameter of the circular center hole 23 is set at approximately 6 mm, circles forming the notches 24 and 25 each has a diameter of approximately 9 mm. The notches 24 and 25 each are positioned approximately 16mm away from the center of the center hole 23. Shapes and sizes of the center hole 23 and the notches 24 and 25 are not limited thereto as long as the printed marks can be visually checked.

The adhesive sheet 20 has an area of approximately 630 mm² and an adhesive strength of approximately 10 gf (0.392 N). When the center hole 23 and the notches 24 and 25 are formed on the adhesive sheet 20 having an elliptical shape having a vertical width of 30mm and a horizontal width of 40 mm, an area of the adhesive sheet 20 is approximately 800 mm². Similarly, when the adhesive sheet 20 has a rectangular shape having a vertical width of 30 mm and a horizontal width of 40 mm, an area of the adhesive sheet 20 is approximately 1050 mm². Consequently, to correspond to a half-eye type frame having a large aspect ratio, the area of the adhesive sheet 20 is preferably approximately 1000 mm² at maximum.

As shown in Fig. 5, the lens holding member 510 is attached to the lens L to be positioned thereto as an end of the chuck 51 of the edging machine 50. The lens holding member 510 includes a cylindrical attachment 511 that is held to be fixed to the lens and a collar-shaped lens holder 512 connected to the attachment 511.

A protrusion 511A that fits into a body of the chuck 51 for positioning when the lends holding member 510 is attached to the body of the chuck 51 is formed on an outer circumference of the attachment 511. The protrusion 511A, for example, includes four protrusions spaced 90° from each other. One of the four protrusions has a difference size from the other three protrusions, so as to determine an orientation thereof in a predetermined direction when being attached to the body of the chuck 51. Further, a cupshaped lens holding surface 512A is formed on an end surface of the lens holder 512.

Next, edging of the spectacle lens L will be described below with reference to Figs. 3A, 3B, 4 and 5.

### Attaching Step

First, the adhesive tape 20 is attached to the convex surface L1 of the spectacle lens L on which the antifouling layer is formed. Specifically, substantially the center of the center hole 23 of the adhesive sheet 20 and substantially the centers of the circles forming the notches 24 and 25 are positioned at substantially the center of the respective printed marks (the center point 11 and the horizontal fiducial marks 12 and 13). The adhesive sheet 20 is attached onto the convex surface L1 so that the adhesive sheet 20 does not cover the printed marks (see Figs. 3A and 3B).

Alternatively, the adhesive sheet 20 may be attached to the lens holding member 510. Specifically, the adhesive sheet 20 is attached to the lens holding surface 512A such that substantially the center of the adhesive sheet 20 coincides with the center of the lens holding surface 512A of the lens holding member 510.

### Fitting Step

Next, the lens holding member 510 is fitted with the convex surface L1 of the spectacle lens L by mounting the lens holding member 510 on the adhesive sheet 20 having been attached to the convex surface L1.

In the fitting step, the spectacle lens L, the convex surface L1 of which is attached with the adhesive sheet 20, is set to be fixed to a known axis alignment device such that the adhesive sheet 20 faces up. A so-called horizontal leveling is performed.

The axis alignment device is also called as a blocker. While the printed marks (see Fig. 3A) on the convex surface L1 of the spectacle lens L, i.e. the center point 11 representing the optical center, and the two horizontal fiducial marks 12 and 13 representing the horizontal direction of the lens are being visually checked, the spectacle lens L is fixed to a predetermined position by the axis alignment device. Although the adhesive sheet 20 attached to the convex surface L1 of the spectacle lens L exhibits opacity because of a foam body layer included therein, the center hole 23 and the notches 24 and 25 formed on the adhesive sheet 20 allows the adhesive sheet 20 to be attached to the spectacle lens L without covering the center point 11 and the horizontal fiducial marks 12 and 13. With this arrangement, at this time of the fixing, the spectacle lens L can be accurately fixed to the axis alignment device.

On the other hand, when the adhesive sheet 20 is attached to the lens holding member 510 in the attaching step, the same operation is performed for the lens to which the tape is not attached.

Next, the lens holding member 510 is attached to the adhesive sheet 20 of the spectacle lens L having been fixed to the axis alignment device. In attaching the lens holding member 510 thereto, among the four protrusions formed on the outer circumference of the attachment 511, the protrusion having a different size from the other three is oriented to the upper side of the spectacle lens L (i.e., the side located upward when the spectacle lens L is wore), so that the center axis of the lens holding member 510 is positioned on the center point 11 of the spectacle lens L (substantially the center of the center hole 23 of the adhesive sheet 20). Specifically, by fixing the lens holding member 510 to an arm of the axis alignment device and pressing the arm to a predetermined position on the lens, the lens holding member is attached to the lens.

On the other hand, when the adhesive sheet 20 is attached to the lens holding member 510 in the attaching step, the same operation is also performed.

### Mounting Step

The spectacle lens L held by the lens holding member 510 via the adhesive sheet 20 is mounted on the chuck 51 as one fixing device of the edging machine 50. Specifically, the lens holding member 510 is inserted into the body of the chuck 51 such that the four protrusions 511A formed on the outer circumference of the attachment 511 fit into concave portions (not shown) formed in the body of the chuck 51. An orientation of the spectacle lens L to be edged is determined by one protrusion having a different size of the four protrusions 511A formed on the outer circumference of the attachment 511.

### Fixing Step

While the lens holding member 510 is attached to the body of the chuck 51, the chuck 52 as the other fixing device of the edging machine 50 is protruded by a clamp shaft, and pressed to the concave surface L2 of the spectacle lens L. With this operation, the spectacle lens L is sandwiched and fixed by the chucks 51 and 52 (see Fig. 4). In other words, the adhesive sheet 20 is positioned between the spectacle lens L and the chuck 51.

### Grinding Step

The edge of the spectacle lens L fixed between the chucks 51and 52 is pressed with the grinding stone 60 in rotation and ground into a predetermined shape.

The edge of the spectacle lens L is ground to fit to the spectacle frame based on a frame data previously stored in the storage. During grinding, water is supplied to the edge of the spectacle lens L by a feed-water nozzle. Thus, heat generated by grinding can be removed and a grinding powder is also washed away.

### Peeling Step

The adhesive sheet 20 attached to the convex surface L1 of the spectacle lens L is peeled off before or after the edged spectacle lens L is mounted on the spectacle frame.

Then, the printings on the convex surface L1 of the spectacle lens L is removed by an organic solvent such as alcohol, and then the spectacle is finally completed.

Next, the above described embodiment (reference, not according to the claimed invention) will be described in more detail with reference to the following examples.

As will be described below, after a convex surface of a predetermined spectacle lens was attached with an adhesive sheet, the spectacle lens was chuck by a pair of chucks and then edged. A degree to which the spectacle lens was axially misaligned was observed. The example is based on the above-described examples of the invention so that a detailed description will be omitted here as necessary when the same description has been already made above.

### (1) Spectacle lens for edging

Two kinds of spectacle plastic lenses (Seiko Super-Sovereign, manufactured by Seiko Epson Corporation) respectively having powers of S=-7.00D and C=-3.00D (-lens), and having powers of S=+5.00D and C=+0.50D (+lens) were used. Each of the lenses was shaped like a circle having a diameter of approximately 75mm, and printed with predetermined marks (see Fig. 3A).

An antifouling layer based on a fluorine-containing silane compound ("Raku Care Coat", "Hyper Amenity Coat": manufactured by Seiko Epson Corporation) was formed on a surface of each of the lenses.

### (2) Adhesive sheet

Three types of adhesive sheets for edging were used as follows. A shape of each of the sheets was the same as the shape of the adhesive sheet 20. In other words, the adhesive sheets each were shaped like an ellipse having a vertical width of 25mm and a horizontal width of 40mm, and provided with predetermined notches (23, 24, 25) (see Fig. 1).

### (2-1) Adhesive sheet A

Base material layer:
Thickness: 0.8mm
Material: chloroprene rubber foam (neoprene foam)
Compressibility: 40% (a value during a later-described chucking (fixing)) Lens-side adhesive layer:
   Thickness: 20µm
   Material: acrylic
   Adhesive strength: 10gf (based on JIS Z 0237)

Chuck-side adhesive layer:
Thickness: 20µm
Material: rubber-base
Adhesive strength: 3gf (based on JIS Z 0237)

### (2-2) Adhesive sheet B (for comparison):

Base material layer:
Thickness: 0.8mm
Material: polyethylene sheet
Compressibility: 0% (a value during a later-described chucking (fixing))

Lens-side adhesive layer:
Thickness: 20µm
Material: acrylic
Adhesive strength: 10gf (based on JIS Z 0237)

Chuck-side adhesive layer:
Thickness: 20µm
Material: rubber-base
Adhesive strength: 3gf (based on JIS Z 0237)

### (2-3) Adhesive sheet C (as a reference example)

A known adhesive sheet for edging having an adhesive layer only on a side attached to the lens was used in combination with a lens lock tape. Adhesive strength thereof was 10gf (based on JIS Z 0237). Compressibility of a base material itself of the adhesive sheet was substantially zero.

### (3) Test method

First, a spectacle lens for edging was set to a lens fixing jig. At this time, the lens was fixed such that an astigmatic axis was set to be in a predetermined direction (for example, 180 degrees).

A half-eye type frame having a large aspect ratio was prepared to be used as a reference frame.

Next, a predetermined adhesive sheet was attached to the convex surface of the spectacle lens for edging. When the adhesive sheets A and B (double-adhesive sheets) were used, the lens holding member was attached on the adhesive sheet A or B and the spectacle lens was fixed to the edging machine ("LE-8080" manufactured by NIDEK Co., Ltd.). When the adhesive sheet C (single-adhesive sheet) was used, the lens lock tape was attached on the adhesive sheet and the spectacle lens was fixed to the edging machine.

Then, the edging was performed based on the previous frame data.

The lens having been edged was fitted to the reference frame and then the misalignment of the astigmatic axis was measured by using a lens meter. Ten lenses of - lens and ten lenses of +lens were edged and a ratio of lenses whose degree of axial misalignment was beyond a tolerable range was calculated. The tolerable range of the axial misalignment was set to be ±2 degrees or less.

The evaluation test results of the axial misalignment are shown in Table 2. The adhesive strength is a value of the lens-side adhesive layer.

**[Table 2]**

| | | Adhesive sheet A | Adhesive sheet B | Adhesive sheet C |
|---|---|---|---|---|
| Adhesive strength (gf) | | 10 | 10 | 10 |
| Compressibility (%) | | 40 | 0 | - |
| Axial Misalignment Occurrence (%) | - lens | 0 | 0 | 0 |
| | + lens | 0 | 70 | 0 |

As shown in Table 2, in the example in which the adhesive sheet A was used, the axial misalignment did not occur even when the edging was performed on either of -lens or +lens. In other words, the same performance can be obtained by using the adhesive sheet A as the performance obtained by using the adhesive sheet C and the lens lock tape together. Thus, the edging process can be simplified at a retail shop of the spectacles. On the other hands, while the axial misalignment of the -lens did not occur in the comparison in which the adhesive sheet B was used, but the axial misalignment of the +lens often occurred. An insight is that, since the -lens was relatively flat while the +lens had a convex surface having a small curvature radius, the adhesive sheet was not suitably deformed and the adhesive area has substantially reduced so that the adhesive strength became small. In the example in which the adhesive sheet A was used, compressibility of the base material layer was 40% and deformation volume was large. Thus, the adhesive sheet A was well fitted to the shape of the convex surface of the lens and the sufficient adhesive area was ensured, so that strong adhesive power was achieved.

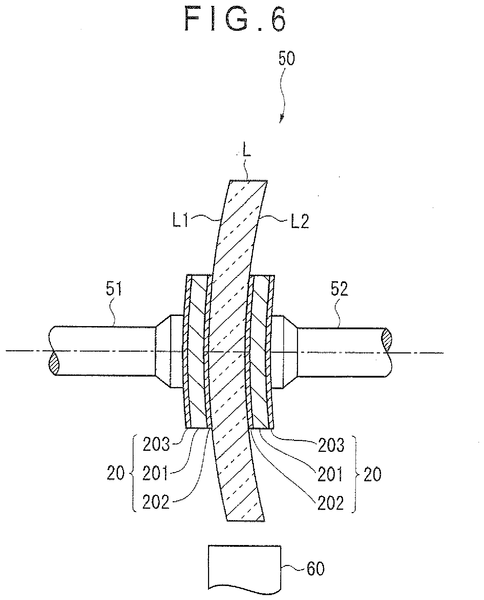

The adhesive sheet 20 may be provided on both surfaces of the spectacle lens l as shown in Fig. 6. The antifouling process is generally performed on both surfaces of the lens. By chucking the both surfaces of the lens via the adhesive sheet 20, the spectacle lens L can be tightly fixed during edging.

When the adhesive sheet 20 is larger than the spectacle lens L, the notches 24 and 25 may be a circularly-bored hole like the center hole 23.
At this time, a portion protruding from the outer circumference of the lens is cut after the adhesive sheet 20 is attached to the spectacle lens L in order to avoid troubles during edging.

When the adhesive strength of the adhesive sheet 20 is sufficiently large, the adhesive sheet 20 may be downsized. At this time, the horizontal fiducial marks (alignment marks) 12 and 13 are not covered with the adhesive sheet 20. Thus, the notches 24 and 25 as described above may not be provided.

Although the adhesive tapes are used for fixing the spectacle lens in the exemplary embodiments, they may be used for other lenses. Also, the invention is applicable to a lens not provided with the antifouling layer formed of the fluorine-containing silane compound.

### Industrial Applicability

The invention is applicable to edging of a spectacle lens and other lens.

## Claims

1. An adhesive sheet which is suitable for fixing a lens in an edging machine and comprises:
(i) a base material layer (2a) which includes
- a sheet member (2a2) formed of a resin foam and having an elasticity, defined as being compressible by ≥ 10 % of its uncompressed thickness when the adhesive sheet is clamped by the chucks of the edging machine and pressed, and, laminated thereon,
- a film (2al);
(ii) provided on the surface of the film (2al), an adhesive layer (2bl) formed of an adhesive composition containing a (meth)acrylic ester-based polymer, a tackifier resin and a cross-linking agent; and
(iii) provided on the base material layer (2a) on the side opposite to the film (2al), an adhesive coating layer (2b2).

2. The adhesive sheet of claim 1, wherein the tackifier resin is at least one of a terpene resin, α-pinene, a terpene-phenol copolymer, a rosin and rosin derivative, a coumarone-indene resin, a hydrocarbon resin, an alkylphenol resin, a xylene resin, and an aromatic petroleum resin.

3. The adhesive sheet of claim 1 or 2, which has notches (24, 25) to allow, when used in a process of edging a lens, the visual checking of a printed mark on the lens.

4. The adhesive sheet of any of claims 1-3, which has a hole (23) to allow, when used in a process of edging a lens, the visual checking of a center point on the lens.

5. A lens edging method comprising using the adhesive sheet of any of claims 1-4, wherein the adhesive sheet is provided between at least one of a pair of chucks and a lens in an edging machine with the adhesive layer (2bl) facing the surface of the lens.

6. The lens edging method of claim 5, wherein the lens to be edged has at least a convex surface (L1), and the adhesive sheet is attached at least to the convex surface (L1) of the lens.

7. The lens edging method of claim 5 or 6, wherein the adhesive sheet is at least as large as the abutting area of the chuck.

8. Assembly, wherein an adhesive sheet of any of claims 1-4 is provided between a chuck and a lens in an edging machine.

## Patentansprüche

1. Adhäsivblatt, das zum Fixieren einer Linse in einer Säummaschine geeignet ist und umfasst:
(i) eine Basismaterialschicht (2a), die umfasst
- ein Blattbauteil (2a2), gebildet aus einem Harzschaum und aufweisend eine Elastizität, die als Komprimierbarkeit von ≥ 10 % von dessen unkomprimierter Dicke definiert ist, wenn das Adhäsivblatt in eine Einspannvorrichutng der Säummaschine eingeklemmt ist und gepresst wird, und laminiert hierauf,
- eine Folie (2a1);
(ii) vorgesehen auf der Oberfläche der Folie (2a1), eine Adhäsivschicht (2b1), gebildet aus einer Adhäsivzusammensetzung, die ein Polymer auf (Meth)acrylsäureester-Basis, ein klebrigmachendes Harz und ein Vernetzungsmittel enthält; und
(iii) vorgesehen auf der Basismaterialschicht (2a) auf der Seite gegenüberliegende zur Folie (2a1) eine Adhäsiv-Beschichtungsschicht (2b2).

2. Adhäsivblatt gemäß Anspruch 1, worin das klebrigmachende Harz zumindest eines von einem Terpenharz, α-Pinen, einem Terpen-Phenol-Copolymer, einem Geigenharz und einem Geigenharzderivat, einem Kumaron-Indenharz, einem Kohlenwasserstoffharz, einem Alkylphenolharz, einem Xylenharz und einem aromatischen Petroleumharz ist.

3. Adhäsivblatt gemäß Anspruch 1 oder 2, das Aussparungen (24, 25) aufweist, um die visuelle Überprüfung einer gedruckten Markierung auf der Linse zu ermöglichen, wenn es in einem Säumverfahren einer Linse verwendet wird.

4. Adhäsivblatt gemäß irgendeinem der Ansprüche 1-3, die ein Loch (23) aufweist, um das visuelle Überprüfen eines Zentralpunkts auf der Linse zu ermöglichen, wenn es in einem Säumverfahren einer Linse verwendet wird.

5. Linsen-Säumverfahren, umfassend die Verwendung des Adhäsivblatts gemäß irgendeinem der Ansprüche 1-4, worin das Adhäsivblatt zwischen zumindest einem Paar von Einspannvorrichtungen und einer Linse in einer Säummaschine vorgesehen wird, wobei die Adhäsivschicht (2b1) der Oberfläche der Linse zugewandt ist.

6. Linsen- Säumverfahren gemäß Anspruch 5, worin die zu säumende Linse zumindest eine konvexe Oberfläche (L1) aufweist, und das Adhäsivblatt auf zumindest die konvexen Oberfläche (L1) der Linse aufgebracht wird.

7. Linsen- Säumverfahren gemäß Anspruch 5 oder 6, worin das Adhäsivblatt zumindest so groß ist wie die angrenzende Fläche der Einspannvorrichtung.

8. Anordnung, worin das Adhäsivblatt gemäß irgendeinem der Ansprüche 1-4 zwischen einer Einspannvorrichtung und einer Linse in einer Säummaschine vorgesehen ist.

## Revendications

1. Feuille adhésive qui est appropriée pour fixer une lentille dans une machine de débordage et comprend :
(i) une couche de matériau de base (2a) qui inclut
- un élément feuille (2a2) formé d'une mousse de résine et présentant une élasticité, défini comme étant compressible de ≥ 10% de son épaisseur non comprimée lorsque la feuille adhésive est serrée par les dispositifs de serrage de la machine de débordage et pressée, et, stratifié sur celui-ci,
- un film (2a1) ;
(ii) disposée sur la surface du film (2a1), une couche adhésive (2b1) formée d'une composition adhésive contenant un polymère à base d'ester (méth)acrylique, une résine donnant du collant et un agent de réticulation ; et
(iii) disposée sur la couche de matériau de base (2a) sur le côté opposé au film (2a1), une couche de revêtement adhésif (2b2).

2. Feuille adhésive selon la revendication 1, dans laquelle la résine donnant du collant est au moins l'un parmi une résine de terpène, du α-pinène, un copolymère de terpène-phénol, une colophane et un dérivé de colophane, une résine de coumarone-indène, une résine hydrocarbonée, une résine d'alkylphénol, une résine de xylène et une résine de pétrole aromatique.

3. Feuille adhésive selon la revendication 1 ou 2, qui présente des encoches (24, 25) pour permettre, lors d'une utilisation dans un processus de débordage d'une lentille, le contrôle visuel d'une marque imprimée sur la lentille.

4. Feuille adhésive selon l'une quelconque des revendications 1-3, qui présente un trou (23) pour permettre, lors d'une utilisation dans un processus de débordage d'une lentille, le contrôle visuel d'un point central sur la lentille.

5. Procédé de débordage de lentille comprenant l'utilisation de la feuille adhésive selon l'une quelconque des revendications 1-4, dans lequel la feuille adhésive est disposée entre au moins l'un d'une paire de dispositifs de serrage et une lentille dans une machine de débordage avec la couche adhésive (2b1) faisant face à la surface de la lentille.

6. Procédé de débordage de lentille selon la revendication 5, dans lequel la lentille à déborder présente au moins une surface convexe (L1), et la feuille adhésive est attachée au moins à la surface convexe (L1) de la lentille.

7. Procédé de débordage de lentille selon la revendication 5 ou 6, dans lequel la feuille adhésive est au moins aussi grande que la zone d'aboutement du dispositif de serrage.

8. Ensemble, dans lequel une feuille adhésive selon l'une quelconque des revendications 1-4 est disposée entre un dispositif de serrage et une lentille dans une machine de débordage.
